# EUROPÄISCHE PATENTSCHRIFT

(11) **EP 1 578 539 B1**
(45) Veröffentlichungstag und Bekanntmachung des Hinweises auf die Patenterteilung: **01.12.2010**
(21) Anmeldenummer: 03767769.7
(22) Anmeldetag: 08.12.2003
(51) Int. Cl.: B05C 17/005

(54) **ABGABEVORRICHTUNG FÜR FLUIDE SUBSTANZEN**
DISPENSING DEVICE FOR FLUID SUBSTANCES
DISPOSITIF DISTRIBUTEUR POUR SUBSTANCES FLUIDES

(30) Priorität: 16.12.2002 DE 10258953
(43) Veröffentlichungstag der Anmeldung: 28.09.2005
(73) Patentinhaber: S & C Polymer Silicon- und Composite-Spezialitäten GmbH, 25335 Elmshorn (DE)
(72) Erfinder: ENGELBRECHT, Jürgen, 22067 Hamburg (DE); MEYER, Guido, 25335 Elmshorn (DE)
(74) Vertreter: König, Beate
(86) Internationale Anmeldenummer: PCT/EP2003/013897
(87) Internationale Veröffentlichungsnummer: WO 2004/054725

(56) Entgegenhaltungen:
- EP-A- 0 539 074
- EP-A- 0 730 913
- EP-A- 1 112 779
- DE-U- 8 805 328
- US-A- 3 532 316
- US-A- 4 261 481
- US-A- 4 432 469
- US-A- 4 538 920
- US-A- 4 981 241
- US-A- 5 788 122
- US-A- 6 161 730

## Beschreibung

Die vorliegende Erfindung betrifft nach ihrer Gattung eine Abgabevorrichtung für fluide Substanzen. Insbesondere betrifft sie eine Abgabevorrichtung, welche ein Aufnahmeelement zur Aufnahme von fluiden Substanzen mit wenigstens zwei fest miteinander verbundenen Behältern mit stirnseitig benachbarten Auslassöffnungen, eine mittels einer Mischdüsenhalterung mit dem Aufnahmeelement verbundene Mischdüse, die mit den Auslassöffnungen fluidleitend verbunden ist, und ein Druck erzeugendes Mittel zum Ausstoßen der fluiden Substanzen durch die Auslassöffnungen umfasst.

Solche Abgabevorrichtungen, welche insbesondere für zahnärztliche Zwecke eingesetzt werden, sind bekannt. Für die Mischung und dosierte Abgabe von zahnärztlichen Mehrkomponentenmaterialien werden z. B. Kartuschen oder Doppelspritzen verwendet, die gewöhnlich aus zwei Behältern bestehen, die zur Aufnahme von zwei unterschiedlichen Substanzen vorgesehen sind. Die Behälter sind an den Stirnseiten mit Auslassöffnungen versehen, welche so gestaltet sind, dass Mischdüsen an diese angeschlossen werden können. Die aus den Behältern beispielsweise durch Stempeldruck ausgepressten unterschiedlichen Komponenten treffen in der Mischdüse zusammen und verlassen diese im gemischten Zustand. Nach dem Mischen härtet die Masse aus. Das gilt auch für den überwiegenden Teil der in der Mischdüse verbleibende Restmenge.

Eine Vorrichtung dieser Art ist in der US-4,767,026 beschrieben. Dabei werden Mischdüsen durch Verdrehen über der Auslassöffnung der Behälter bajonettverschlussartig mit zwei Halteelementen fixiert. Der Nachteil dieser Vorrichtung ist, dass durch die Drehbewegung einer Mischdüse über den Auslassöffnungen der Behälter eine Kontamination der Komponenten untereinander und damit ein Aushärten der Komponenten in den Auslassöffnungen und damit ein Verstopfen dieser Auslassöffnungen möglich ist.

Eine bessere Lösung ist eine Ausführung, bei welcher die Einlässe der Mischdüsen bzw. der Auslassöffnungen der Behälter ausreichend voneinander getrennt sind. Diese Vorrichtung ist so gestaltet, das die Komponenten erst in einem gewissen Abstand von den Auslassöffnungen innerhalb der Mischdüse zusammentreffen, was gewährleistet, dass die Aushärtung innerhalb der Düse auf einen von den Auslassöffnungen hinreichend entfernten Bereich beschränkt bleibt. Zudem erlaubt es diese Vorrichtung eine zum Erzeugen einer Mischung verwendete Mischdüse, die durch Aushärtung ihres Inhaltes unbrauchbar wurde, als quasi "temporärer Verschluss" der Auslassöffnung an den Behältern zu belassen, bis ein Mischen mit einer neu aufzusetzenden Mischdüse erfolgen soll.

Eine Mischdüse solcher Art wird in US-533,760 gezeigt. Zwar wird mit einem Bajonettverschluss gearbeitet, dieser ist aber an der Mischdüse drehbar gehalten, so dass nach dem Ansetzen der Düse an die Auslassöffnungen der Behälter nur ein Haltering gedreht wird, welcher in einen formschlüssigen Eingriff in ein Paar von Klauen an der Stirnseite der Behälter gelangt, und damit die Mischdüse festhält. Der Ring ist aufwändig mit der Mischdüse verbunden und wird in verhältnismäßig großer Zahl, nämlich einer pro Mischdüse, benötigt.

Dieses gilt entsprechend für eine andere bekannte Anordnung (EP-A-730913), bei welcher die Bajonett-Kupplungsorgane am Mischdüsengehäuse befestigt sind, in welchem, relativ drehbar zum Gehäuse, ein die Einlassöffnung der Mischdüse bildender Einsatz enthalten ist.

Eine Vorrichtung gemäß US-4,753,536 besteht aus zwei fest miteinander verbundenen, die Komponenten enthaltenden Behältern, die stirnseitig einander benachbarte Auslassstutzen tragen. Auf die Auslassstutzen ist eine Mischdüse aufsetzbar, die durch eine Kupplungseinrichtung in der aufgesetzten Stellung zu sichern ist. Die Kupplungseinrichtung umfasst eine von den von den Auslassstutzen getragene Kupplungsplatte, die eine quer zur Richtung der Auslassstutzen verlaufende Führung für zwei Kopplungsschieber bildet. Diese sind an der Führung einander entgegengesetzt in eine Schließstellung verschiebbar und tragen Kupplungsleisten, die in der Schließstellung jeweils um 180° über einen Kupplungsflansch der Mischdüse greifen.

Eine in der DE-100 38 882 A1 beschriebene Vorrichtung zeigt einen rahmenförmigen Schieber, welcher in linearen Führungen einer auf den röhrenförmigen Auslassstutzen der Behälter aufgesetzten Kupplungsplatte verschiebbar ist, wobei der jeweilige Endanschlag eine geöffnete oder geschlossene Stellung bedeutet. In dieser Druckschrift wird auf den Vorteil eines kurzen Kraftübertragungsweges von der Lagerung bis zur Klemmebene des Mischdüsenhalters hingewiesen.

Alle vorgenannten Systeme zum Fixieren der Mischdüsen in oder an ausreichend voneinander getrennten Auslassöffnungen haben den Nachteil eines separat zu fertigenden und zu montierenden Befestigungselementes.

Die US 6 161 730 A offenbart eine Schnappverbindung zwischen einem Behälter, der die beiden Substanzen getrennt enthält, und einem Mischaufsatz. Diese Schnappverbindung ist gebildet durch ein Teil 6 mit Ringkragen 60 und federelastischen Schenkeln 6' und 6", die mit Füßen 61 in entsprechende Aussparungen 26 im Behälter 2 verrastet werden können. Weiter enthält die bekannte Abgabevorrichtung ein Übergangsstück 3, das am Mischaufsatz angebracht ist. Dieser ist bei der in Fig. 4 dargestellten Ausführung im Übergangsstück ebenfalls verrastet, möglicherweise wegen des Hebelarms der Einrastschenkel 6', 6", denn das Teil 6 ist wiederum ein separates Teil und muss selbst gehaltert werden.

Der Erfindung liegt die Aufgabe zugrunde, eine verbesserte Abgabevorrichtung bereitzustellen, deren Herstellung und Handhabung vereinfacht ist.

Erfindungsgemäss wird diese Aufgabe durch eine Abgabevorrichtung gemäss den Merkmalen von Anspruch 1 gelöst. Vorteilhafte Ausgestaltungen der Erfindung sind in den Unteransprüchen angegeben.

Eine erfindungsgemässe Abgabevorrichtung für fluide Substanzen umfasst ein Aufnahmeelement zur Aufnahme von fluiden Substanzen mit wenigstens zwei fest miteinander verbundenen Behältern mit stirnseitig benachbarten Auslassöffnungen, eine mittels einer Mischdüsenhalterung mit dem Aufnahmeelement verbundene Mischdüse, die mit den Auslassöffnungen fluidleitend verbunden ist, und ein Druck erzeugendes Mittel zum Ausstossen der fluiden Substanzen durch die Auslassöffnungen. Die Mischdüsenhalterung ist ein lösbarer Rastverschluss, der an dem Aufnahmeelement befestigt ist und wenigstens einen elastisch verformbaren Federarm mit einem daran ausgebildeten Vorsprung zum hinterschneidenden Eingriff mit der Mischdüse umfasst.

Durch die rückstellende Federkraft des wenigstens einen Federarms ist die Rastverbindung gegen Lösen gesichert. Andererseits kann sie durch Wegdrücken des Federarms nach außen, vorteilhaft am freien Ende, von einer Bedienungsperson einfach gelöst werden.

Für den Eingriff mit dem Rastvorsprung des Federarms weist die Mischdüse zweckmäßig ein geeignetes Strukturlement, beispielsweise eine Vertiefung auf. Als Druck erzeugendes Mittel dient üblicherweise beispielsweise ein Kolben, Druckluft oder dergleichen.

Bei einer vorteilhaften Ausführungsform der Erfindung können Aufnahmeelement und Rastverschluss einteilig ausgebildet sein. Zusätzlich kann der Rastverschluss wenigstens ein im wesentlichen nicht verformbares Rastelement mit einem daran ausgebildeten Vorsprung zum hinterschneidenden Eingriff mit der Mischdüse umfassen. Das im wesentlichen nicht verformbare Rastelement greift hierbei in ein zum hinterschneidenden Eingriff geeignetes Strukturelement der Mischdüse. Dieses Strukturelement kann dasselbe, wie bei dem Eingriff des elastisch verformbaren Federarms ein. Ein Lösen des Rastverschlusses erfolgt hierbei durch Ausüben eines mechanischen Drucks auf den elastisch verformbaren Federarm. Das nicht verformbare Rastelement bildet ein starres Gegenlager zum elastisch verformbaren Federarm.

Weiterhin kann der Rastverschluss wenigstens ein plastisch verformbares Rastelement mit einem daran ausgebildeten Vorsprung zum hinterschneidenden Eingriff mit der Mischdüse und/oder ein durch Ausüben einer genügenden mechanischen Druckkraft brechendes Rastelement mit einem daran ausgebildeten Vorsprung zum hinterschneidenden Eingriff mit der Mischdüse aufweisen. Diese Rastelemente können in das gleiche Strukturelement wie der elastisch verformbare Federarm greifen. In diesem Fall ist der Rastverschluss nur zum einmaligen Gebrauch gedacht, da die elastisch verformten bzw. gebrochenen Rastelemente einen wiederholten Einsatz im allgemeinen nicht ermöglichen.

Bei einer weiteren vorteilhaften Ausführungsform der Erfindung ist die Mischdüse an dem Aufnahmeelement mithilfe eines lösbaren Kopplungselements verbunden. Das Kopplungselement ist hierbei entweder an dem Aufnahmeelement oder an der Mischdüse lösbar befestigt; ferner ist an dem Kopplungselement der Rastverschluss befestigt.

Wenn das Kopplungselement am Aufnahmeelement lösbar befestigt ist, so ist das Kopplungselement über den lösbaren Rastverschluss mit der Mischdüse verbunden. Wenn das Kopplungselement an der Mischdüse lösbar befestigt ist, so ist das Kopplungselement über den lösbaren Rastverschluss mit dem Aufnahmeelement verbunden.

In jedem der beiden Fälle kann das Kopplungselement mit dem Rastverschluss einteilig ausgebildet sein.

Bei den erfindungsgemäßen Ausführungsformen sind die Auslassöffnungen der Behälter vorteilhaft aus Auslassstutzen geformt. Ferner können am Aufnahmeelement, an der Mischdüse und/oder dem Kopplungselement Führungselemente vorgesehen sein, welche ein Einrasten der jeweilig zu verrastenden Teile erleichtern.

Die Erfindung wird nunmehr anhand mehrerer Ausführungsbeispiele näher erläutert, wobei Bezug auf die beigefügten Zeichnungen genommen wird. Es zeigen:
- Fig. 1: eine Seitenansicht (oben) und eine Draufsicht (unten) durch eine Ausführungsform (A) der erfindungsgemäßen Abgabevorrichtung;
- Fig. 2: jeweils eine Seitenansicht durch drei unterschiedliche Aus- führungsformen (A-C) der erfindungsgemäßen Abgabevor- richtung;
- Fig. 3: jeweils eine Seitenansicht durch eine Ausführungsform (A) der erfindungsgemäßen Abgabevorrichtung in drei verschiedenen Zuständen beim Einrasten (oben) und eine Seitenansicht durch eine weitere Ausführungsform der erfindungsgemäßen Abgabevor- richtung (unten).

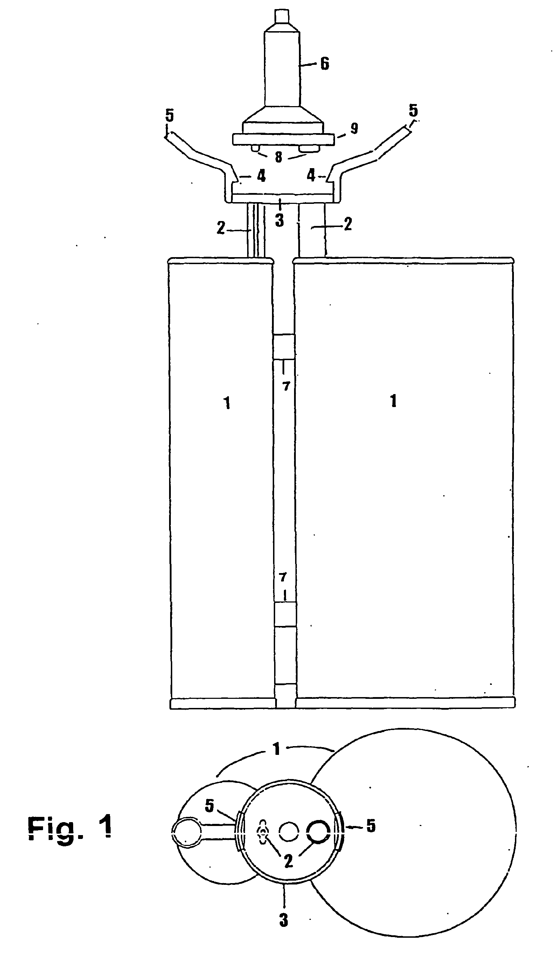

Zunächst sei Fig. 1 betrachtet, worin eine Seitenansicht (oben) und eine Draufsicht (unten) durch eine Ausführungsform (A) der erfindungsgemäßen Abgabevorrichtung gezeigt sind. Die erfindungsgemäße Abgabevorrichtung umfasst ein aus zwei Behältern 1 bestehendes Aufnahmeelement zur Aufnahme von fluiden Substanzen sowie eine Mischdüse 6. Die über Streben 7 verbundenen Behälter 1 sind stirnseitig mit Auslassstutzen 2 versehen, durch welche die fluiden Substanzen durch Ausüben einer geeigneten Druckkraft in Richtung der Auslassstutzen ausgedrückt werden können. Die Abgabevorrichtung wirkt zu diesem Zweck mit einem Druck ausübenden Mittel zusammen, beispielsweise Pumpenstempel oder ein Druck erzeugendes elektrisches Gerät. Die beiden Auslassstutzen 2 sind gegebenenfalls über ein versteifendes Verbindungselement 3, hier als Scheibe 3 dargestellt, miteinander verbunden. An der Scheibe 3 sind zwei elastisch verformbare Federarme 5 befestigt. Die Federarme 5 sind jeweils mit ihrem einen Ende an der Scheibe 3 in Form von Rasthebeln angebracht. An den Federarmen 5 sind hakenförmige Vorsprünge 4 ausgebildet, welche geeignet sind in hinterschneidenden Eingriff mit der Mischdüse 6 zu gelangen. Die Mischdüse 6 weist zu diesem Zweck eine Gegenstruktur 9 auf, an der die Federarme 5 mit ihren hakenförmigen Vorsprüngen 4 einrasten. In der Verraststellung der Mischdüse mit dem Aufnahmeelement erstellen die Mündungen 8 der Mischdüse 6 eine fluidleitende Verbindung mit den Auslassstutzen 2 der Behälter 1. Die Federarme 5 sind so ausgebildet, dass sie erst in hinterschneidenden Eingriff mit der Gegenstruktur 9 gelangen können, wenn sie durch Ausüben eines mechanischen Drucks, bei welchem die hakenförmigen Vorsprünge 4 voneinander entfernt werden, elastisch verformt werden. Um die Mischdüse 6 an dem Aufnahmeelement zu befestigen, muss auf die elastischen Federarme 5 eine genügend große mechanische Druckkraft entgegen der rückstellenden Federkraft der Federarme 5 ausgeübt werden. Hierdurch können die Rastelemente, hier als hakenförmige Vorsprünge 4 dargestellt, hinter der Gegenstruktur 9 der Mischdüse 6 einrasten. Durch die rückstellende Federkraft der elastischen Federarme 5 ist die Rastverbindung gegen Lösen gesichert. Die Rastverbindung kann durch Ausüben einer ausreichenden mechanischen Druckkraft auf die Federarme 5, bei welcher die hakenförmigen Vorsprünge 4 voneinander entfernt werden, gelöst werden. Um den Rastverschluss zu lösen, kann beispielsweise ein Bediener die beiden Federarme 5 an ihren freien Enden manuell auseinander drücken.

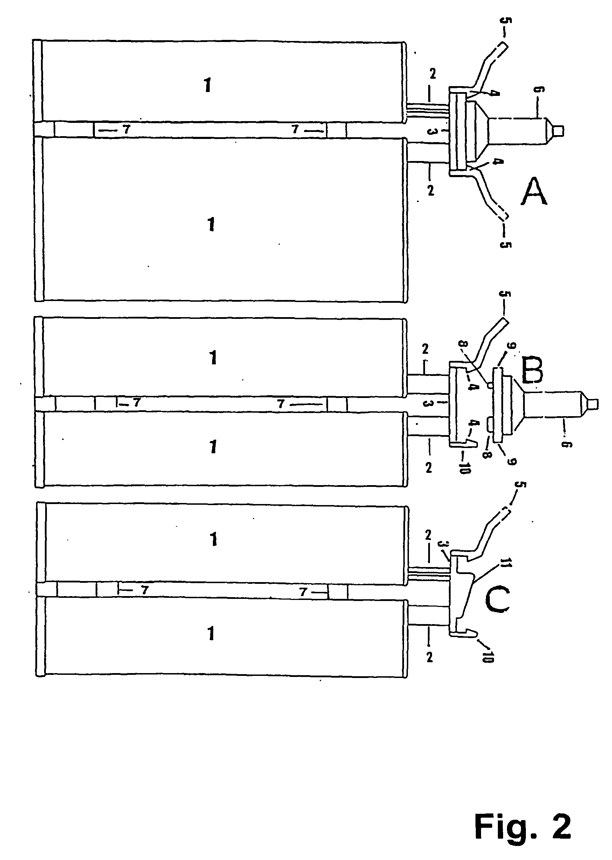

Fig. 2 zeigt jeweils eine Seitenansicht durch drei unterschiedliche Ausführungsformen A-C der erfindungsgemäßen Abgabevorrichtung, wobei Ausführungsform A der in Fig. 1 gezeigten Ausführungsform entspricht. Um Wiederholungen zu vermeiden, werden nur die Unterschiede der Ausführungsformen B-C dargestellt. Bei den Elementen der Ausführungsformen B-C, welche zu den Elementen der Ausführungsform A gleich sind, wird auf die hierzu gemachten Ausführungen Bezug genommen.

Ausführungsform B unterscheidet sich von Ausführungsform A dahingehend, dass, anstelle von zwei elastisch verformbaren Federarmen 5, nur ein einzelner elastisch verformbarer Federarm 5 und ein im wesentlichen nicht verformbares, starres Rastelement (10) vorgesehen sind. Bei einer Verrastung der Mischdüse 6 am Rastverschluss muss nur die rückstellende Federkraft des einzelnen Federarms überwunden werden, damit der hakenförmige Vorsprung 4 hinter die Gegenstruktur 9 der Mischdüse 6 gelangen kann. Gleiches gilt für ein Lösen des Rastverschlusses, was beispielsweise durch Ausüben einer manuellen Druckkraft auf das freie Ende des Federarms 5 entgegen seiner rückstellenden Federkraft bewirkt werden kann. Wie der Federarm 5 greift das starre Rastelement 10 hinter die Gegenstruktur 8 der Mischdüse 6. Ein unerwünschtes Lösen der Rastverbindung ist durch die rückstellende Federkraft des Federarms 5 gewährleistet.

Die Ausführungsform C entspricht der Ausführungsform B, mit Ausnahme, dass zusätzlich ein Führungselement 11 zum erleichterten Einrasten der zu verrastenden Mischdüse vorgesehen ist. Das Führungselement 11 kann ebenso auf der Mischdüse oder dem in Ausführungsform E gezeigten Kopplungselement 12 vorgesehen sein.

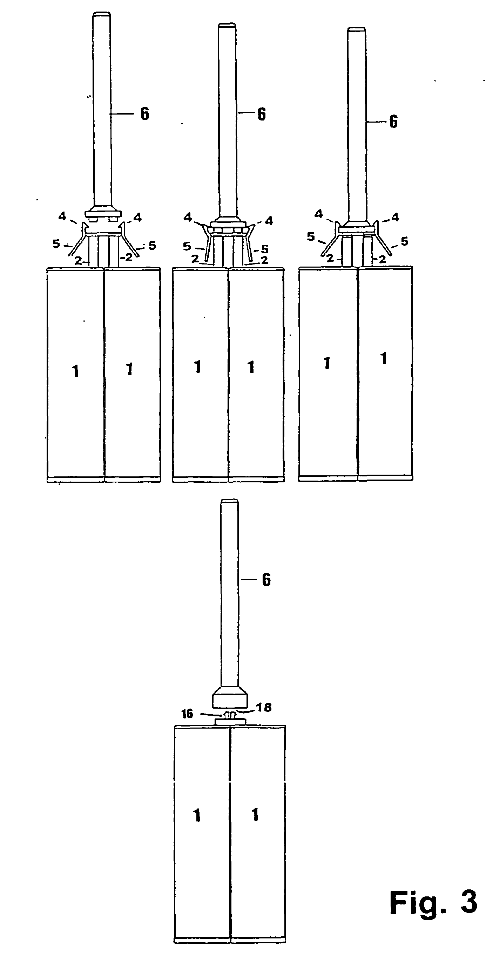

Fig. 3 zeigt in den oberen Abbildungen jeweils eine Seitenansicht durch Ausführungsform A der erfindungsgemäßen Abgabevorrichtung in drei verschiedenen Zuständen beim Verrasten. In der linken Abbildung ist der Zustand vor dem Einrasten dargestellt. In der mittleren Abbildung ist der Zustand dargestellt, in welchem die beiden elastisch verformbaren Federarme 5 durch die Gegenstruktur der Mischdüse 6 entgegen der rückstellenden Federkraft auseinander gedrückt werden, damit die hakenförmigen Vorsprünge 4 in hinterschneidenden Eingriff mit der Mischdüse gelangen. In der rechten Abbildung ist der verrastete Zustand von Mischdüse und Aufnahmeelement dargestellt, bei welchem die hakenförmigen Vorsprünge 4 hinter die Gegenstruktur der Mischdüse 6 greifen.

In der unteren Abbildung von Fig. 3 ist eine Seitenansicht durch eine Ausführungsformen der erfindungsgemäßen Abgabevorrichtung vor dem Verrasten gezeigt. Die elastisch verformbaren Federarme 16 sind am Aufnahmeelement angeordnet sind, wobei die hakenförmigen Vorsprünge der Federarme 16 im Unterschied zu den vorigen Ausführungsformen voneinander abgewandt sind. Entsprechend müssen die Federarme 16 zum Verrasten der Mischdüse mit dem Aufnahmeelement entgegen einer rückstellenden Federkraft zusammengedrückt werden. Die Federarme 16 greifen in eine entsprechende Gegenstruktur 18 der Mischdüse 6.

## Patentansprüche

1. Abgabevorrichtung für fluide Substanzen, welche ein Aufnahmeelement zur Aufnahme von fluiden Substanzen mit wenigstens zwei fest miteinander verbundenen Behältern (1, 1) mit stirnseitig benachbarten Auslassöffnungen (2), eine mittels einer Mischdüsenhalterung mit dem Aufnahmeelement verbundene Mischdüse (6), die mit den Auslassöffnungen (2) fluidleitend verbunden ist, und ein Druck erzeugendes Mittel zum Ausstossen der fluiden Substanzen durch die Auslassöffnungen umfasst, wobei die Mischdüsenhalterung ein lösbarer Rastverschluss
(4, 5, 9) ist, der an dem Aufnahmeelement (1, 1) befestigt ist **dadurch gekennzeichnet, dass**
der am Aufnahmeelement befestigte Rastverschluss wenigstens einen elastisch verformbaren Federarm (5) mit einem daran ausgebildeten Vorsprung (4) zum hinterschneidenden Eingriff mit der Mischdüse (6) umfasst.

2. Abgabevorrichtung nach Anspruch 1, **dadurch gekennzeichnet, dass** der Rastverschluss (4, 5, 9) einteilig mit dem Aufnahmeelement (1, 1) ausgebildet ist.

3. Abgabevorrichtung nach Anspruch 1 oder 2, **dadurch gekennzeichnet, dass** der Rastverschluss wenigstens ein im wesentlichen nicht verformbares Rastelement (10) mit einem daran ausgebildeten Vorsprung (4) zum hinterschneidenden Eingriff mit der Mischdüse (6) umfasst.

4. Abgabevorrichtung nach Anspruch 3 oder 4, **dadurch gekennzeichnet, dass** der Rastverschluss wenigstens ein durch Ausüben einer genügenden mechanischen Druckkraft brechendes Rastelement mit einem daran ausgebildeten Vorsprung zum hinterschneidenden Eingriff mit der Mischdüse umfasst.

5. Abgabevorrichtung nach einem der vorhergehenden Ansprüche, **dadurch gekennzeichnet, dass** die Auslassöffnungen als Auslassstutzen (2) geformt sind.

6. Abgabevorrichtung nach einem der vorhergehenden Ansprüche, **dadurch gekennzeichnet, dass** das Aufnahmeelement, Mischdüse und/oder Kopplungselement mit Führungselementen zum Führen der zu verrastenden Teile versehen sind.

7. Abgabevorrichtung nach einem der vorhergehenden Ansprüche, **dadurch gekennzeichnet, dass** die Auslassöffnungen (2) mit einem versteifenden Verbindungselement (3) verbunden sind.

## Claims

1. Dispensing device for fluid substances which includes a receiving element to receive fluid substances, having at least two containers (1, 1) which are fixedly connected to each other and have outlet orifices (2) adjacent to the end face, a mixing nozzle (6) which is connected to the receiving element by means of a mixing nozzle holder and which is connected in a fluid-carrying manner to the outlet orifices (2), and a pressure-producing means for ejecting the fluid substances through the outlet orifices, wherein the mixing nozzle holder is a releasable latching closure (4, 5, 9) which is attached to the receiving element (1, 1), **characterised in that** the latching closure attached to the receiving element includes at least one elastically deformable resilient arm (5) with a projection (4) formed thereon for under-cut engagement with the mixing nozzle (6).

2. Dispensing device as claimed in claim 1, **characterised in that** the latching closure (4, 5, 9) is formed as one piece with the receiving element (1, 1).

3. Dispensing device as claimed in claim 1 or 2, **characterised in that** the latching closure includes at least one substantially non-deformable latching element (10) with a projection (4) formed thereon for under-cut engagement with the mixing nozzle (6).

4. Dispensing device as claimed in claim 3 or 4, **characterised in that** the latching closure includes at least one latching element, which is broken by exertion of a sufficient mechanical pressing force and has a projection formed thereon for under-cut engagement with the mixing nozzle.

5. Dispensing device as claimed in any one of the preceding claims, **characterised in that** the outlet orifices are formed as outlet ports (2).

6. Dispensing device as claimed in any one of the preceding claims, **characterised in that** the receiving element, mixing nozzle and/or coupling element are provided with guide elements to guide the parts to be latched.

7. Dispensing device as claimed in any one of the preceding claims, **characterised in that** the outlet orifices (2) are connected to a stiffening connecting element (3).

## Revendications

1. Dispositif de distribution de substances fluides comprenant un élément de réception, pour recevoir des substances fluides, comportant au moins deux réservoirs (1, 1) reliés fermement l'un à l'autre et présentant des ouvertures de sortie frontales adjacentes (2), une buse de mélange (6) reliée à l'élément de réception par l'intermédiaire d'un support de buse de mélange, laquelle buse est en connexion fluide avec les ouvertures de sortie (2), et un moyen générateur de pression pour expulser les substances fluides à travers les ouvertures de sortie, dans lequel le support de buse de mélange est un système de verrouillage à encliquetage détachable (4, 5, 9) fixé à l'élément de réception (1, 1), **caractérisé en ce que** le système de verrouillage à encliquetage fixé à l'élément de réception comprend au moins un bras-ressort déformable de manière élastique (5) sur lequel est formée une protubérance (4) permettant d'enserrer la buse de mélange (6).

2. Dispositif de distribution selon la revendication 1, **caractérisé en ce que** le système de verrouillage à encliquetage (4, 5, 9) est formé d'une seule pièce avec l'élément de réception (1, 1).

3. Dispositif de distribution selon la revendication 1 ou 2, **caractérisé en ce que** le système de verrouillage à encliquetage comprend au moins un élément à encliqueter essentiellement non déformable (10) sur lequel est formée une protubérance (4) permettant un engagement contre-dépouillé avec la buse de mélange (6).

4. Dispositif de distribution selon la revendication 3 ou 4, **caractérisé en ce que** le système de verrouillage à encliquetage comprend au moins un élément à encliqueter, pouvant casser sous l'effet d'une force de pression mécanique suffisante, sur lequel est formée une protubérance permettant un engagement contre-dépouillé avec la buse de mélange.

5. Dispositif de distribution selon l'une quelconque des revendications précédentes, **caractérisé en ce que** les ouvertures de sortie sont réalisées sous la forme de manchons de sortie (2).

6. Dispositif de distribution selon l'une quelconque des revendications précédentes, **caractérisé en ce que** l'élément de réception, la buse de mélange et/ou l'élément de couplage sont pourvus d'éléments de guidage permettant de guider les éléments à encliqueter.

7. Dispositif de distribution selon l'une quelconque des revendications précédentes, **caractérisé en ce que** les ouvertures de sortie (2) sont reliées à un élément de liaison rigidifiant (3).
